# DEMANDE DE BREVET EUROPEEN

(11) **EP 0 711 024 A1**
(43) Date de publication de la demande: **08.05.1996**
(21) Numéro de dépôt: 95402358.6
(22) Date de dépôt: 23.10.1995
(51) Int. Cl.: H02K 19/10

(54) **Machine dynamo-électrique tournante à réluctance variable à effet Vernier et procédé de fabrication**

(30) Priorité: 24.10.1994 FR 19940012679
(71) Demandeur: KOEHLER, Gérard, F-92410 Ville-d'Avray (FR)
(72) Inventeur: KOEHLER, Gérard, F-92410 Ville-d'Avray (FR)
(74) Mandataire: Derambure, Christian

(57) **Abrégé**

Des dents (13) des pôles du stator (4), excités chacun par une bobine (7) de phase, définissent avec des dents (11) du rotor (8) une rangée (12) d'entrefers avec des nombres de dents (13) et (11) différents.

Ces dents sont situées aux extrémités d'arceaux (14,16) d'axes perpendiculaires à l'axe de rotation Z de façon à définir sur Z une deuxième rangée d'entrefers.

Arceaux provenant du sectionnement d'un anneau bobiné en tôle magnétique mince à grains orientés, fixés par surmoulage ménageant des canaux de réfrigération.

Alimentation possible par redressement d'un générateur triphasé à fréquence variable, du commerce.

L'arbre creux (9) peut comporter un organe d'utilisation tel qu'un taraudage (23) d'un vérin ou tel qu'un embrayage d'un véhicule à propulsion mixte.

## Description

La présente invention concerne une machine dynamo-électrique tournante à réluctance variable à effet Vernier, telle qu'un moteur, constituée d'une part par un stator comprenant au moins un circuit magnétique statorique ayant des pôles statoriques saillants dans une direction radiale **R**, au nombre de **Ps**, excités par des bobines appartenant à des phases au nombre de **q** et une culasse, et d'autre part par un rotor d'axe **Z** comprenant un circuit magnétique rotorique ayant des pôles rotoriques au nombre de **Pr**, un arbre et des moyens de roulement, les circuits magnétiques statorique et rotorique étant concentriques, leurs pôles ou dents définissant entre eux une rangée de forme cylindrique d'entrefers, les nombres **Ps** et **Pr** étant différents de façon à ce que le rotor tourne dans une direction θ lors de l'excitation des phases dans un ordre donné.

Par exemple, il peut y avoir 2 groupes **g** de 3 phases **q** donnant 2x3=6 pôles **Ps**, la différence entre **Ps** et **Pr** étant égale à **g**, comme sur la figure 3 du EP A 0205027 où **Pr**= 8.

Une telle disposition présente cependant les défauts suivants:
- Pour relier des pôles excités simultanément par une même phase, le flux est obligé de faire un grand trajet, par exemple entre des extrémités diamétralement opposées du stator et du rotor, ce qui introduit des réluctances parasites et augmente les pertes fer.
- Des flux de fuite se produisent entre des entrefers non-excités, en provoquant de plus des forces antagonistes, surtout avec de fortes excitations, comme cela est montré sur la figure 3 du PCT WO 93/12573.
- Le refroidissement naturel d'une structure massive est insuffisant lorsqu'on demande une grande puissance massique.
- Le bobinage à l'intérieur d'une encoche à entrée réduite au niveau d'un entrefer cylindrique est onéreux et ne permet pas d'avoir un faible foisonnement des fils de bobinage comme dans le cas d'un bobinage sur carcasse.
- Le flux s'inverse à la fréquence du courant dans les dents du rotor et dans les parties communes des circuits, il est commuté à la fréquence du courant multiplié par le nombre de phases, ce qui entraîne des pertes par hystérésis.

Avec des phases magnétiquement séparées, le PCT WO 90/11641 apporte un remède à ces défauts (partiellement pour les pertes fer) mais il est encore affecté par les inconvénients suivants:
- Les surfaces d'entrefers ont une longueur souvent plus de dixfois supérieure à leur largeur, ce qui augmente les flux de franges à faibles variations de réluctance donc à faible rendement au détriment du flux direct et diminue le coefficient N²/R de proportionnalité du carré des ampèretours (NI)² à la puissance d'excitation U²/R par rapport à la même surface d'entrefer, mais de forme proche d'un carré.
- Les tôles empilées axialement ne peuvent pas avoir une très faible épaisseur et le flux changeant de direction dans le plan des tôles ne permet pas l'utilisation de tôles à grains orientés suivant la direction du laminage.

Le PCT WO 92/00628 permet d'éviter ces inconvénients, mais dans une disposition qui n'est pas à effet Vernier et qui nécessite au moins 3 structures monophasées angulairement calées avec précision et juxtaposées en donnant une grande longueur d'arbre, surtout dans le cas où l'on souhaite avoir six phases.

On n'a donc pas la possibilité d'avoir une structure de rotor monobloc. Les couples sont engendrés dans des plans différents perpendiculaires à l'axe **Z** pouvant entraîner des résonances.

Le but de la présente invention est de remédier aux inconvénients cités ci-dessus dans une structure unique à effet Vernier, de diminuer les coûts de fabrication et de permettre de nouvelles applications. En particulier, il vise une application à des véhicules à moteur thermique semblable à celles qui sont décrites dans le DE A 3009279 ou le PCT WO 91/08919, mais avec des fonctions plus étendues.

L'invention vise aussi à dévoiler un procédé de positionnement d'arceaux pendant une opération de surmoulage de circuit magnétique.

Suivant l'invention, les circuits magnétiques statorique et rotorique définissent également, entre eux, au moins une autre rangée cylindrique d'entrefers, axialement située à une certaine distance de la première rangée, le circuit magnétique statorique étant constitué par un assemblage en couronne d'arceaux statoriques ayant des bras terminés par des dents, un arceau réunissant des dents de rangées différentes ayant sensiblement même calage angulaire θ, les arceaux étant constitués chacun par un empilage de bandes de tôles magnétiques minces cintrées suivant différents rayons autour d'axes de cintrage dont la direction est transversale à l'axe **Z,** les surfaces d'entrefers étant constituées par les extrémités des tôles des arceaux et les arceaux d'un groupe **g** d'arceaux statoriques à calage angulaire θ croissant étant chacun excités par une bobine d'une phase respectivement croissante de façon à ce que l'excitation d'une bobine d'une phase provoque un flux magnétique sensiblement situé dans un plan passant par l'axe **Z** et limité dans une direction radiale **R** à une partie de ce plan.

De préférence, le circuit magnétique rotorique est également constitué par un assemblage d'arceaux à bras plus courts réunissant des pôles de rangées différentes.

De plus, pour chaque calage angulaire θ d'arceau statorique, on dispose au moins un ensemble de deux arceaux suivant une direction parallèle à l'axe **Z** et les bras voisins de deux arceaux statoriques d'un même ensemble sont entourés par une même bobine, de façon à avoir des circuits magnétiques élémentaires en forme de **E**.

Un organe d'utilisation peut être accouplé directement dans une direction radiale **R** au rotor de la machine et, avec un rotor intérieur, l'arbre peut avoir une forme en manchon creux, les moyens de roulement étant compris dans l'organe d'utilisation.

Si le reste de la division par six du nombre **Ps** de pôles statoriques d'une rangée d'entrefers est égal à la différence dudit nombre **Ps** au nombre **Pr** de pôles rotoriques, la machine peut être alimentée par un variateur de vitesse délivrant des courants triphasés à fréquence variable.

Un assemblage d'arceaux par surmoulage peut se faire avec prépositionnement à queues d'aronde et avec passage de canaux de réfrigération traversant la matière de surmoulage entre les arceaux statoriques.

D'autres particularités, avantages,procédés de fabrication et possibilités d'utilisation de l'invention apparaîtront dans la description ci-après.

Aux dessins annexés, donnés à titre non limitatifs:
la figure 1 est une coupe partielle perpendiculaire à son axe **Z** d'une machine suivant l'invention, dans une réalisation la plus simple;
la figure 2 est la coupe II-II de la figure 1;
la figure 3 est la coupe III-III de la figure 2;
la figure 4 est une demi-coupe semblable à la figure 1 d'une machine à six phases;
la figure 5 est un schéma d'alimentation de la machine de la figure 4;
la figure 6 est une coupe partielle semblable à la figure 1 d'une machine à deux dents par pôle, et
la figure 7 est la coupe schématique d'un groupe moto-propulseur thermique d'un véhicule, équipé d'une machine suivant l'invention.

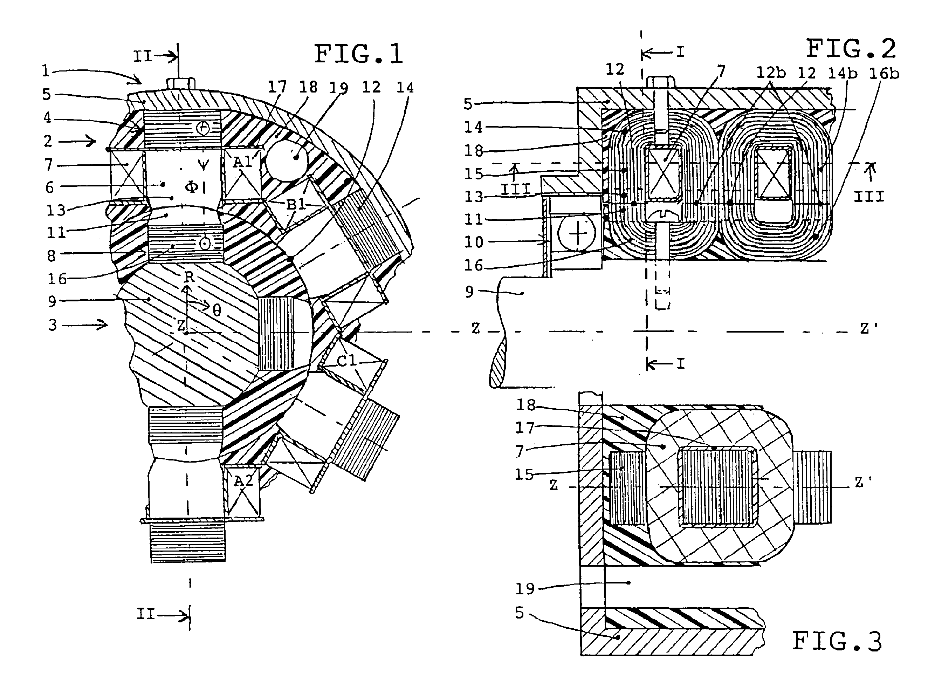

La figure 1 représente la machine 1 constituée par un stator 2 à pôles saillants et un rotor denté 3. Le stator comprend un circuit magnétique statorique 4 logé dans une culasse 5. Les pôles 6 entourés chacun d'une bobine 7 de phase sont au nombre minimal de 6: 3 phases **q** repérées A,B,C réparties en 2 groupes **g** pour équilibrer les couples et compenser les attractions radiales.

Le rotor 3, ici intérieur au stator, comprend un circuit magnétique rotorique 8, un arbre 9 d'axe de rotation **Z** et des moyens de roulement 10. Le circuit magnétique rotorique 8 comporte 6-2=4 dents 11 formant une rangée cylindrique 12 d'entrefers avec les pôles 6 du stator terminés chacun par une dent 13.

Les bobines des phases A,B et C sont bobinées sur des carcasses 17 excitant chacune un arceau à calage angulaire θ respectivement progressif.

Contrairement à la disposition habituelle des machines à effet Vernier, ces pôles statoriques 6 et ces dents rotoriques 11 ne sont pas respectivement magnétiquement réunis entre eux mais on voit sur la coupe suivant l'axe Z de la figure 2 qu'un pôle statorique fait partie d'un arceau statorique 14 à deux bras 15 ayant même calage angulaire θ et terminés chacun par une dent 13 tandis qu'une dent ou pôle rotorique 11 fait partie d'un arceau rotorique 16 à deux bras plus courts terminés chacun par une dent 11.

Lors de l'excitation d'une bobine d'une phase, au lieu de rester dans un plan **Rθ** perpendiculaire à l'axe **Z,** le trajet du flux Φ est situé dans un plan **RZ** passant par l'axe **Z** et limité dans la direction radiale **R** à une petite partie de ce plan. Les circuits magnétiques statorique 4 et rotorique 8 définissent donc une deuxième rangée cylindrique 12b d'entrefers axialement située à une certaine distance de la première, la machine 1 étant donc axialement hétéropolaire.

Dans un même calage angulaire θ d'arceau, on peut disposer un ensemble de deux arceaux statoriques 14 et 14b ainsi que deux arceaux rotoriques 16,16b côte à côte suivant une direction parallèle à l'axe **Z** et sur la vue de la figure 3, on voit que les deux bras 15 voisins des arceaux statoriques 14,14b de l'ensemble en double couronne sont entourés par une même bobine bobinée sur une carcasse 17 de façon à avoir un circuit magnétique élémentaire en forme de **E** qui est plus avantageux qu'un circuit en **C.**

On peut évidemment ajouter axialement encore d'autres ensembles en double couronne en augmentant la surface totale d'entrefers d'une façon modulaire sans augmenter l'allongement de chaque entrefer.

Le nombre d'arceaux par couronne peut aussi être modulaire à peu de frais d'investissement.

Le calage entre les pôles statoriques 6 et rotoriques 11 d'une autre couronne ou double couronne peut être décalé d'une fraction de pas polaire par rapport au même calage de la première des couronne et son alimentation polyphasée peut être déphasée par rapport à l'alimentation de la première couronne d'un angle électrique correspondant audit décalage angulaire de façon à lisser la courbe du couple de la machine.

Les arceaux 14 et 16 sont constitués chacun par un empilage de bandes de tôles magnétiques minces à grains orientés cintrées suivant différents rayons autour d'axes de cintrage dont la direction est transversale à l'orientation des grains et à l'axe **Z,** les surfaces d'entrefers étant constituées par les extrémités des tôles des arceaux. La tôle a de préférence une induction à saturation voisine de 1,7 T et des pertes à cette induction à 400 Hz inférieures à 15 W/kg.

Les extrémités des côtés des arceaux comportent ici un chanfrein affectant toutes les tôles cintrées de façon à limiter la zone de saturation du fer.

Le circuit magnétique de chaque phase a ainsi une forme arrondie la plus courte possible, sans joint magnétique ni rétrécissement hors des surfaces d'entrefers et il est réalisé en fer de haute perméabilité et à faibles pertes, même aux fréquences élevées. Son flux ne peut être dévié dans le circuit d'une autre phase et sa direction correspond en tout point à l'orientation privilégiée de la tôle. Il est commuté à la fréquence de l'alimentation, sans inverser sa direction.

A la fermeture d'un entrefer, les tôles sont recouvertes chacune progressivement et toutes simultanément ce qui diminue les effets de la saturation par rapport à un recouvrement chacune brusquement et toutes les unes après les autres.

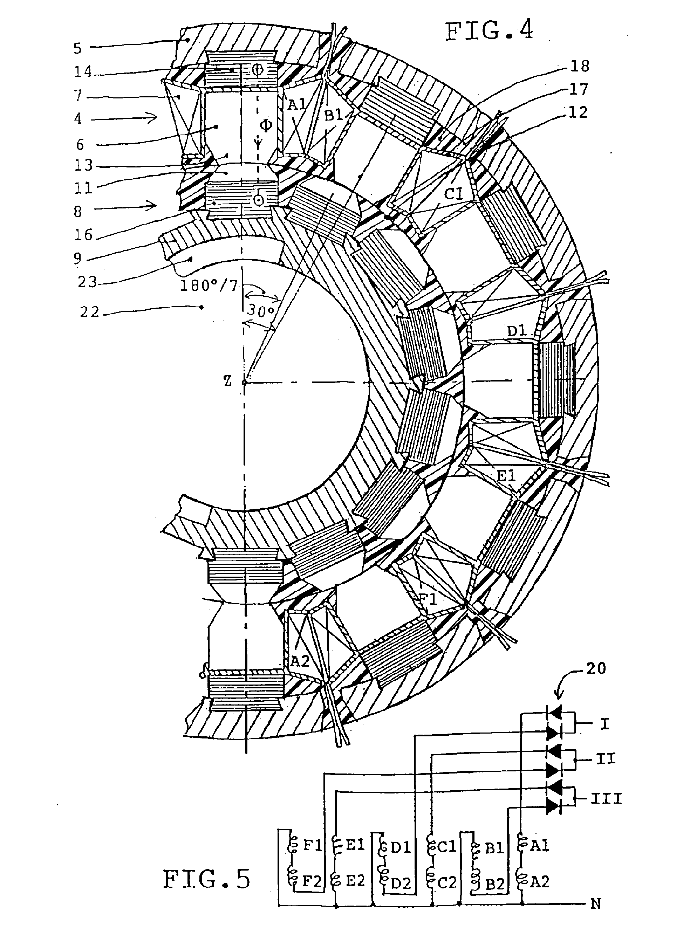

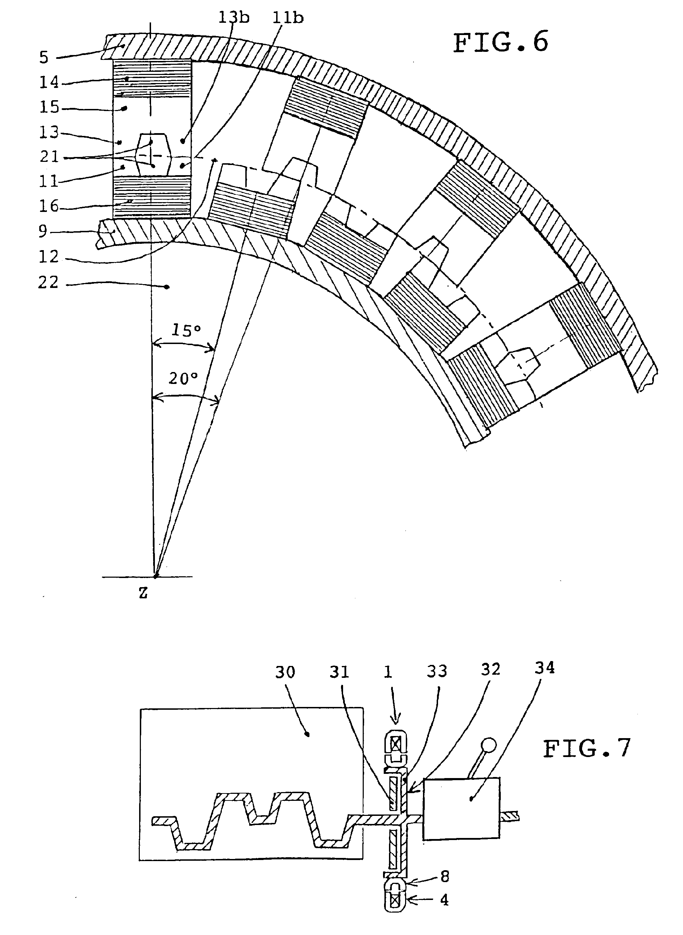

Une paire d'arceaux bruts est obtenue par sectionnement d'un anneau formé par enroulement et collage d'une bande à largeur constante de tôle comme représenté sur les figures 4 et 5 du PCT WO 92/00628. Le sectionnement peut se faire par électro-érosion à fil faisant apparaître la face cylindrique des entrefers comme cela est représenté sur les figures 6 et 7 du même PCT ou par tronçonnage plan suivi d'une rectification.

La tension à l'enroulement avec collage donne un faible foisonnement et un isolement des tôles et on évite l'emploi de couteux outillages de découpe qui entraînent d'importantes pertes de matière.

Les arceaux statoriques 14 munis de bobines 7 bobinées sur des carcasses 17 sont assemblés en forme de couronne sur la culasse 5, chacun fixé ici par une vis centrale traversant cette culasse et les arceaux rotoriques 16 sont assemblés chacun sur l'arbre 9 par une vis centrale traversant l'arceau. Ces assemblages sont ensuite surmoulés avec une matière plastique 18 à charge minérale pour assurer une bonne rigidité, éviter le décollement des tôles extérieures des arceaux et améliorer le refroidissement.

Au moment du surmoulage du circuit magnétique statorique, il y a de la place entre les arceaux pour prévoir des conduits axiaux 19 traversant la matière de surmoulage 18, utilisés pour une réfrigération forcée.

Les moyens de roulement 10 sont ici des roulements à billes entre un flanc de la culasse 5 et l'arbre 9.

La figure 4 est semblable à la figure 1 limitée à un demi-cercle, avec **Ps**=12 pôles statoriques 6 à 30° à chacun une dent 13. L'arbre 9 est creux, en forme de manchon.

Pour avoir 6 phases, il faut que la différence entre les nombres **Ps** de pôles statoriques 6 et **Pr** de pôles rotoriques 11 d'une rangée d'entrefers 12 soit égale au reste de la division par 6 du nombre **Ps** de pôles statoriques.

On a **Ps**/6=2. Ici, **Pr>Ps,** de façon à avoir, contrairement à la figure 1, un bon rapport cyclique de denture tout en laissant de la place aux conducteurs qui peuvent avoir une section trapézoïdale. Il faut donc avoir **Pr=Ps**+2=14.

Sur la figure 5, on voit que ces 6 phases repérées de A à F à chacune deux bobines en série A1-A2...peuvent être alimentées à partir d'un réseau triphasé en utilisant des diodes 20 pour ventiler les alternances positives et négatives de chaque phase du réseau sur des bobines différentes, en respectant bien entendu l'ordre de succession d'excitation de ces bobines et en ayant de préférence un sens d'enroulement donnant une même direction du flux dans les arceaux statoriques pour limiter les pertes par hystérésis dans les arceaux rotoriques 16.

Pour alimenter la machine, cette disposition permet d'utiliser un variateur de vitesse du commerce, délivrant des courants triphasés à fréquence variant par exemple de 0,1 à 400 Hz, à la condition qu'on ne demande pas à la machine un fonctionnement en pas-à-pas.

Sur la figure 6, limitée à quatre arceaux statoriques 14 sans leurs bobines ni les surmoulages, on a **q**=3 phases et **g**=6 groupes donnant **Ps**=18 arceaux statoriques à 20°.Il y a de la place pour avoir **Pr>Ps** donc **Pr=Ps**+6=24 arceaux rotoriques à 15°.

Ici, cependant, chaque extrémité de bras d'arceau statorique et rotorique comporte une échancrure centrale 21 qui fait apparaître par rangée 12 deux dents 13,13b et respectivement 11,11 b à section décroissante à pas statorique et rotorique identiques.

Le flux d'un arceau statorique peut se refermer par des dents d'arceaux rotoriques différents.

On double ainsi le nombre de pas par tour sans avoir deux fois plus d'arceaux et de bobines. Cela permet aussi de respecter un rapport cyclique de denture favorable.

Bien entendu, on peut avoir plus de deux dents par arceau ou un nombre différent de dents par arceau statorique et rotorique.

Au lieu d'utiliser des vis comme sur la figure 2 pour positionner les arceaux sur les pièces 5 et 9 avant le surmoulage, on peut avoir un prépositionnement par un assemblage à queues d'aronde avec un certain jeu dépendant des tolérances des cotes des arceaux et un positionnement précis par attraction magnétique des surfaces d'entrefers des arceaux provoquée par un agencement convenable de la partie en vis-à-vis du moule de surmoulage, cette partie comportant des pôles ayant chacun exactement la position d'une surface d'entrefer et étant relié à un aimant permanent ou à un électroaimant. Par ce procédé, le positionnement est plus précis et plus simple.

Pour résister à l'attraction magnétique radiale, la matière de surmoulage 18 des arceaux statoriques 14 est ancrée dans des trous de la culasse 5, par où peuvent passer les conducteurs de raccordement des bobines 7. Les arceaux rotoriques 16 sont maintenus par les ponts de matière 18 passant entre les pôles 11.

La forme en couronne de la machine 1 suivant la figure 4 laisse un grand espace disponible 22 au centre de la machine permettant d'avoir un arbre 9 creux en forme de manchon dans lequel on peut loger un organe d'utilisation 35. Par exemple à l'intérieur de ce manchon, on a représenté sur la figure 4 un taraudage 23 à filets rectangulaires dans lequel peut passer une vis sans fin à rotation empêchée réalisant ainsi un vérin indexable à forte poussée. On voit que les moyens de roulement 10 sont ici compris dans l'organe d'utilisation d'une manière symbiotique.

Le refroidissement de la machine est de plus favorisé par sa forme en couronne.

On aurait aussi pu loger une pompe ou un autre organe d'utilisation mécanique 35 à l'intérieur du manchon.

Dans le cas d'un circuit magnétique statorique 4 intérieur, l'organe d'utilisation 35 peut être disposé dans la direction radiale **R** à l'extérieur du circuit magnétique rotorique 8 pour former par exemple une roue-motrice.

La figure 7 représente une autre application de la machine à un véhicule à propulsion mixte: On a représenté un moteur thermique 30 relié à un premier plateau mobile 31 d'un embrayage 32 dont le deuxième plateau 33 est relié à une boite de vitesse 34 actionnant elle-même les roues motrices du véhicule.

Une machine 1 suivant l'invention, en forme de couronne, a son circuit magnétique rotorique intérieur 8 fixé sur la périphérie du deuxième plateau 33 de l'embrayage 32 constituant l'organe d'utilisation mécanique 35.

Cette machine peut remplir les fonctions suivantes:
- Démarrage du moteur thermique 30 (suppression du démarreur et de son accouplement).
- Recharge des accumulateurs (suppression de l'alternateur avec sa courroie).
- Propulsion électrique avec arrêt du moteur thermique 30 en circuit urbain, à la condition d'augmenter la capacité des accumulateurs, mais dans une moindre mesure que dans le cas d'une propulsion tout-électrique. La boite de vitesse 34 peut être utilisée.
- Freinage à récupération d'énergie dans les deux modes de propulsion.
- Augmentation de l'accélération en propulsion à moteur thermique 30 au démarrage ou pour un dépassement.
- Marche arrière électrique, facilitant les manoeuvres (suppression de la marche arrière de la boite 34).
- Recharge au garage du domicile des accumulateurs de propulsion, sans risque de tomber en panne d'alimentation.

L'implantation de cette machine sur un véhicule peut se faire sans augmentation de la longueur d'arbre de l'ensemble propulseur et sans adjonction de moyens de roulement ou de liaison mécanique par engrenage.

Bien entendu, des modifications peuvent être apportées à ces descriptions sans sortir du domaine revendiqué.

On peut par exemple avoir une machine 1 à deux circuits magnétiques statoriques concentriques et se faisant face, entre lesquels est situé le circuit magnétique rotorique 8 constitué par des paquets de tôles planes disposés en deux couronnes identiques d'axe **Z**, les plans de chaque tôle étant perpendiculaires à l'axe **Z** et les extrémités radialement opposées de chaque paquet constituant les dents ou pôles rotoriques 11, comme sur la figure 5 du EP A 553582. Dans cette disposition, on a donc quatre entrefers en série dans un circuit magnétique élémentaire, doublant ainsi les réluctances d'entrefers sans beaucoup augmenter la réluctance de fer.

On peut aussi supprimer certains groupes **g** d'arceaux statoriques 14 pour des motifs d'économie ou d'encombrement, et si l'organe d'utilisation ne nécessite une rotation qu'à l'intérieur d'une fraction de tour comme dans le cas de la commande de l'orientation de pales ou aubes, on peut également supprimer certains arceaux rotoriques 16.

## Revendications

1. Machine dynamo-électrique tournante à réluctance variable à effet Vernier (1), telle qu'un moteur, constituée d'une part par un stator (2) comprenant au moins un circuit magnétique statorique (4) ayant des pôles statoriques saillants dans une direction radiale **R,** au nombre de **Ps,** excités par des bobines (7) appartenant à des phases (A, B, C..) au nombre de **q** et une culasse (5), et d'autre part par un rotor (3) d'axe **Z** comprenant un circuit magnétique rotorique (8) ayant des pôles rotoriques (11) au nombre de **Pr,** un arbre (9) et des moyens de roulement (10), les circuits magnétiques statorique (4) et rotorique (8) étant concentriques, leurs pôles ou dents (6,11) définissant entre eux une rangée de forme cylindrique (12) d'entrefers, les nombres **Ps** et **Pr** étant différents de façon à ce que le rotor tourne dans une direction θ lors de l'excitation des phases dans un ordre donné, **caractérisée en ce que** les circuits magnétiques statorique (4) et rotorique (8) définissent également, entre eux, au moins une autre rangée cylindrique (12b) d'entrefers, axialement située à une certaine distance de la première rangée (12), le circuit magnétique statorique (4) étant constitué par un assemblage en couronne d'arceaux statoriques(14) ayant des bras (15) terminés par des dents (13), un arceau (14) réunissant des dents (13) de rangées (12,12b) différentes ayant sensiblement même calage angulaire θ, **en ce que** les arceaux (14) sont constitués chacun par un empilage de bandes de tôles magnétiques minces cintrées suivant différents rayons autour d'axes de cintrage dont la direction est transversale à l'axe **Z, en ce que** les surfaces d'entrefers sont constituées par les extrémités des tôles des arceaux et **en ce que** les arceaux d'un groupe **g** d'arceaux statoriques (14) à calage angulaire θ croissant sont chacun excités par une bobine (7) d'une phase respectivement croissante, de façon à ce que l'excitation d'une bobine d'une phase provoque un flux magnétique élémentaire sensiblement situé dans un plan passant par l'axe **Z** et limité dans une direction radiale **R** à une partie de ce plan.

2. Machine selon la revendication 1, **caractérisée en ce que** chaque arceau statorique (14) comporte, sur chaque rangée (12), plusieurs dents (13,13b) ayant entre elles un pas égal au pas rotorique.

3. Machine selon la revendication 1 ou 2, dans laquelle il n'y a qu'un circuit magnétique statorique (4), **caractérisée en ce que** le circuit magnétique rotorique (8) est également constitué par un assemblage d'arceaux (16) à tôles cintrées empilées réunissant des pôles (11) de rangées (12) différentes, les arceaux rotoriques ayant des bras (15) plus courts que ceux des arceaux statoriques (14).

4. Machine selon l'une quelconque des revendications précédentes, **caractérisée en ce que**, pour chaque calage angulaire θ d'arceau statorique, on dispose au moins un ensemble de deux arceaux (14,14b) suivant une direction parallèle à l'axe Z et **en ce que** les bras (15) voisins de deux arceaux statoriques (14,14b) d'un même ensemble sont entourés par une même bobine (7) de façon à avoir des circuits magnétiques élémentaires en forme de **E**.

5. Machine selon la revendication 3 ou 4, **caractérisée en ce qu'**un organe d'utilisation (35) est accouplé directement dans une direction radiale **R** au rotor (3) de la machine (1).

6. Machine selon la revendication 5, dans laquelle le circuit magnétique rotorique (8) est intérieur au circuit magnétique statorique (4), **caractérisée en ce que** l'arbre (9) a une forme en manchon creux dans lequel est logé l'organe d'utilisation à l'intérieur du rotor (3) et **en ce que** les moyens de roulement (10) de la machine sont compris dans l'organe d'utilisation (35).

7. Machine selon la revendication 6, **caractérisée en ce que** le circuit magnétique rotorique (8) est fixé sur un embrayage (32) à deux plateaux (31,33) accouplant un moteur thermique (30) à une boite de vitesse (34) d'un véhicule à moteur thermique, à la périphérie du plateau (33) de l'embrayage (32) relié à la boite de vitesse (34).

8. Machine selon l'une quelconque des revendications précédentes, **caractérisée en ce que** le reste de la division par six du nombre **Ps** de pôles statoriques (6) d'une rangée d'entrefers (12) est égal à la différence dudit nombre **Ps** au nombre **Pr** de pôles rotoriques (11) de cette rangée d'entrefers et **en ce que** la machine (1) est alimentée par un générateur triphasé à fréquence variable dont les alternances sont ventilées par des diodes (20) sur les bobines (7).

9. Machine selon l'une quelconque des revendications précédentes, dans laquelle les arceaux (14,16) des circuits magnétiques (4,8) sont maintenus sur leurs structures respectives (5,9) par une opération de surmoulage, **caractérisée en ce que** les arceaux (14,16) sont prépositionnés par un assemblage à queues d'aronde.

10. Machine selon l'une quelconque des revendications précédentes, dans laquelle les arceaux statoriques (14) sont maintenus sur la culasse (5) par une opération de surmoulage, **caractérisée en ce que** des canaux (19) de réfrigération traversent la matière de surmoulage (18).

11. Procédé pour la réalisation d'une machine selon l'une quelconque des revendications précédentes, dans laquelle les arceaux (14,16) des circuits magnétiques sont maintenus par une opération de surmoulage avec un outil de moulage, **caractérisée en ce que** le positionnement des arceaux dans l'outil de moulage est effectué par attraction magnétique des surfaces d'entrefers provoquée par un agencement convenable de la partie du moule située en vis-à-vis des surfaces d'entrefers.
